# EUROPÄISCHE PATENTSCHRIFT

(11) **EP 2 882 788 B1**
(45) Veröffentlichungstag und Bekanntmachung des Hinweises auf die Patenterteilung: **12.10.2016**
(21) Anmeldenummer: 13750672.1
(22) Anmeldetag: 08.08.2013
(51) Int. Cl.: C08G 18/10, C08G 18/36, C08G 18/48, C08G 18/66, C08J 9/35

(54) **KOMBINATIONSSCHAUM**
COMBINATION FOAM
MOUSSE COMBINÉE

(30) Priorität: 09.08.2012 EP 12179836
(43) Veröffentlichungstag der Anmeldung: 17.06.2015
(73) Patentinhaber: BASF SE, 67056 Ludwigshafen am Rhein (DE); BASF Schweiz AG, 4057 Basel (CH)
(72) Erfinder: PRISSOK, Frank, 49448 Lemförde (DE); HARMS, Michael, 49356 Diepholz (DE); VALLO, Martin, 49565 Bramsche (DE)
(86) Internationale Anmeldenummer: PCT/EP2013/066613
(87) Internationale Veröffentlichungsnummer: WO 2014/023794

(56) Entgegenhaltungen:
- WO-A1-2008/087078
- WO-A1-2012/065926

## Beschreibung

Die Erfindung betrifft einen Kombinationsschaum, der eine Matrix aus Polyurethanschaum und darin enthaltene geschäumte Partikel aus thermoplastischem Polyurethan enthält, dessen Verwendung und Verfahren zu seiner Herstellung.

Polyurethane werden heutzutage aufgrund ihres weiten Eigenschaftsprofils in einer Vielzahl von Anwendungen eingesetzt. Polyurethane können dabei sowohl in kompakter als auch in geschäumter Form eingesetzt werden, wobei ein sehr weiter Dichtebereich von kompakt mit einer Dichte größer 1,00 g/cm³ bis zu ca. 0,01 g/cm³ für geschäumte Körper möglich ist. Polyurethane können dabei beispielsweise in Form von Duromeren, Elastomeren, thermoplastischen Elastomeren (TPU), mikrozellulären Elastomeren, Integralschaumstoffen, Weichschaumstoffen, Hartschaumstoffen oder Halbhartschaumstoffen vorliegen.

Durch Kombination von Polyurethan mit anderen Materialien können auch Verbundmaterialien hergestellt werden, durch die das Einsatzgebiet des Werkstoffs "Polyurethan" noch erweitert wird. So ist es möglich, durch Einbringen von geschäumten Partikeln in eine Matrix aus Polyurethan Hybridmaterialien mit reduzierter Dichte und besonderen Eigenschaften zu erhalten und/oder die Materialkosten zu reduzieren.

WO 2006/015440 offenbart Hybridmaterialien aus einer Polyurethanmatrix und darin enthaltenen geschäumten Polyurethanteilchen, beispielsweise Recyclingmaterial. Nachteile solcher Verbundmaterialien aus Polyurethan und recyceltem Polyurethanschaum ist eine nur schlechte Haftung zwischen den geschäumten Recyclingteilchen und dem Matrixmaterial. Weiter sind auch die mechanischen Eigenschaften eines solchen Materials verbesserungswürdig. Bedingt durch die Offenzelligkeit der Recyclingschäume nehmen diese Schäume eine größere Menge an Bindemittel auf.

WO 2008/087078 offenbart Hybridmaterialien, enthaltend eine Matrix aus Polyurethan und darin enthaltenen geschäumten Partikeln aus thermoplastischem Polyurethan. Die geschäumten Partikel aus thermoplastischem Polyurethan basieren auf einem Polyesterpolyol auf Basis von Adipinsäure und Butan-1,4-diol und 4,4'-Diphenylmethandiisocyanat (4,4'MDI). Andere geschäumte Partikel aus thermoplastischem Polyurethan basieren auf Polytetrahydrofuran, Butan-1,4-diol und 4,4'-MDI. Die Matrix aus Polyurethan basiert auf Polyetherolen auf Basis von Propylenoxid/Ethylenoxid in Kombination mit Isocyanat-Prepolymeren auf Basis von MDI und Polyetherol-Mischungen mit einem NCO-Gehalt von 13,9 %.

WO 2012/065926 A1 beschreibt ein Verfahren zur Herstellung einer Schuhsohle, die ein Hybridmaterial aus einem Polyurethanschaum als Matrixmaterial umfasst, sowie geschäumte Teilchen aus thermoplastischem Polyurethan. In den Beispielen offenbart WO 2012/065926 A1

Kombinationsschäume, bei denen zuerst thermoplastische geschäumte Partikel aus einem Polyesterpolyol (Adipinsäure/1,4-Butandiol), 1,4-Butandiol und 4,4'-MDI hergestellt werden.

Die Haftung zwischen Polyurethan-Matrix und geschäumten Partikeln aus thermoplastischem Polyurethan (TPU) ist nicht für alle Anwendungen ausreichend gut, so dass die mechanischen Eigenschaften des Matrixschaums nicht für alle Anwendungen ausreichen.

Aufgabe der vorliegenden Erfindung ist es, einen Kombinationsschaum bereitzustellen, der eine verbesserte Haftung zwischen Matrixmaterial und geschäumten Partikeln zeigt.

Vorzugsweise sollen gegenüber den bekannten Hybridmaterialien die mechanischen Eigenschaften verbessert sein, beispielsweise bezüglich Elastizität und Reißfestigkeit.

Die Aufgabe wird erfindungsgemäß gelöst durch einen Kombinationsschaum, enthaltend eine Matrix aus Polyurethanschaum und darin enthaltenen geschäumten Partikeln aus thermoplastischem Polyurethan, wobei Matrix und Partikel jeweils aus Polyol-Komponenten und Polyisocyanat-Komponenten aufgebaut sind, dadurch gekennzeichnet, dass mindestens 50 Gew.-% der die Polyol-Komponenten der Matrix und Partikel bildenden Grundbausteine identisch sind und mindestens 50 Gew.-% der die Polyisocyanat-Komponente der Matrix und Partikel bildenden Grundbausteine identisch sind, wobei die Matrix ganz offenkundig ist und die in der Matrix enthaltenen geschäumten Partikel zumindest teilweise geschlossenzellig sind.

Die Aufgabe wird zudem gelöst durch Verwendung dieses Kombinationsschaums als Schuhsohle, Fahrradsattel, Polsterungen, in Bauteilen im Automobilinnen- und -außenbereich, in Bällen und Sportgeräten oder als Bodenbelag, insbesondere für Sportflächen, Leichtathletiklaufbahnen, Sportbahnen, Kinderspielplätze und Gehwege.

Die Aufgabe wird ferner gelöst durch ein Verfahren zur Herstellung derartiger Kombinationsschäume durch Umsetzung der die Matrix aus Polyurethanschaum bildenden Polyol-Komponenten und Polyisocyanat-Komponenten sowie gegebenenfalls Kettenverlängerern, Vernetzungsmitteln, Katalysatoren, Treibmitteln, weiteren Additiven oder Gemischen davon in Gegenwart der schäumenden oder bevorzugt geschäumten Partikel aus thermoplastischem Polyurethan.

Materialien, bei denen ein Schaumstoff von einem Schaumstoff/Matrixmaterial umschlossen wird, werden im Rahmen dieser Erfindung als Kombinationsschäume bezeichnet.

Polyurethanschäume im Sinne der Erfindung umfassen alle bekannten schaumförmigen Polyisocyanat-Polyadditionsprodukte, wie Weichschaumstoffe, Hartschaumstoffe oder Integralschaumstoffe, wie auch Hartschäume. Weitere Details zu Polyurethanen finden sich im "Kunststöffhandbuch, Band 7, Polyurethane, Carl Hanser Verlag, 3. Auflage 1993, Kapitel 5 - 8 sowie 10 - 12.

Im Rahmen der Erfindung werden unter Polyurethan-Schaumstoffen vorzugsweise Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen vorzugsweise eine Druckspannung bei 10 % Stauchung nach DIN 53 421 / DIN EN ISO 604 von größer 15 bis kleiner 80 kPa auf. Vorzugsweise verfügen erfindungsgemäße Polyurethan-Halbhartschaumstoffe und Polyurethan-Weichschaumstoffe über eine Offenzelligkeit nach DIN ISO 4590 von größer 85 %, besonders bevorzugt größer 90 %. Weitere Details zu erfindungsgemäßen Polyurethan-Weichschaumstoffen und Polyurethan-Halbhartschaumstöffen finden sich im "Kunststoffhandbuch, Band 7, Polyurethane", Carl Hanser Verlag, 3. Auflage 1993, Kapitel 5.

Unter elastomeren Polyurethan-Schaumstoffen sind im Rahmen dieser Erfindung vorzugsweise Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % der Ausgangsdicke aufweisen. Dabei kann es sich um einen Polyurethan-Halbhartschaumstoff oder einen Polyurethan-Weichschaumstoff handeln.

Bei Polyurethan-Integralschaumstoffen handelt es sich um vorzugsweise Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 0,1 g/cm³. Auch bei Polyurethan-Integralschaumstoffen im Sinne der Erfindung kann es sich um Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Besonders bevorzugt ist als Matrixmaterial ein elastischer Schaumstoff oder ein Integral-Schaumstoff mit einer Dichte von 0,8 bis 0,1 g/cm³, insbesondere von 0,6 bis 0,3 g/cm³.

Im erfindungsgemäßen Kombinationsschaum ist die Matrix aus Polyurethanschaum ganz offen-zellig. Die in der Matrix enthaltenen geschäumten Partikel aus thermoplastischem Polyurethan sind zumindest teilweisegeschlossenzellig. Die Herstellung dieses Kombinationsschaums wird dadurch erreicht, dass der geschlossenzellige Anteil des Schaumstoffs vorher als expandierter, geschlossenzelliger Partikelschaum hergestellt wird und in einem zweiten Schritt mit einer von den Grundbausteinen sehr ähnlichen, bzw. chemisch identischen Rezeptur vermischt, ausgetragen und zur Reaktion gebracht wird. Der zweite Schaumanteil bildet aufgrund der eingesetzten Additive vorzugsweise eine offenzellige, schrumpffreie Matrix aus und verbindet sich mit den vorher eingebrachten geschlossenzelligen Partikeln. Die Matrix und die Partikel sind vorzugsweise ganz überwiegend oder nahezu chemisch identisch, wodurch sich im Vergleich zu reinen Partikel- oder Systemschäumen wie auch gegenüber den aus WO 2008/087078 bekannten Hybridmaterialien bessere mechanische Eigenschaften und höhere Elastizitäten bei durchschnittlich geringeren Dichten ergeben. Dadurch, dass die Basisrezepturen der geschlossenzelligen und offenzelligen Anteile weitgehend gleich sind, ergibt sich eine hervorragende Haftung der Phasen aneinander, die zu dem hohen mechanischen Niveau entscheidend beiträgt. Erfindungsgemäß sind mindestens 50 Gew.-% der die Polyolkomponente der Matrix und Partikel bildenden Grundbausteine identisch und mindestens 50 Gew.-% der die Polyisocyanat-Komponente der Matrix und Partikel bildenden Grundbausteine identisch.

Zur Ermittlung der entsprechenden Gewichtsanteile wird wie folgt vorgegangen:
Sämtliche Polyolkomponenten der Matrix und der Partikel werden ermittelt und aufgelistet, wobei die Gew.-% der einzelnen Polyole an der Gesamtheit der Polyole der jeweiligen Matrix oder Partikel, die 100 Gew.-% ergibt, bestimmt werden. Vergleicht man nun die einzelnen Polyole und ihre Gewichtsteile für die Matrix und die Partikel, so müssen mindestens 50 Gew.-% der Polyole der Matrix auch in den Partikeln enthalten sein und umgekehrt. Dies kann anhand der Beispiele der vorliegenden Erfindung erläutert werden:
   Wie in Tabelle 1 dargestellt, liegen in den erfindungsgemäßen Kombinationsschäumen unterschiedliche Polyole vor (Polyol 1, Polyol 3, Polyol 4 und der Kettenverlängerer KV), während in dem TPU-Partikeln (ETPU) Polyol 1 und Kettenverlängerer KV vorliegen. Bezogen auf die Summe an Polyolen (Polyole 1 bis 6 plus Kettenverlängerer) beträgt gemäß Beispiel 1 der Anteil an Polyol 1 68,8 % und der Anteil an Kettenverlängerer 7,5 %. Für das ETPU beträgt der Anteil an Polyol 1 91,8 % und der Anteil an Kettenverlängerer 8,2 %. Damit sind Polyol 1 (68,8 %) und Kettenverlängerer (7,5 %) gemäß Beispiel 1 identisch mit den jeweiligen Komponenten des ETPU, insgesamt also 76,3 Gew.-%.

Dabei ist hier jedes Polyol einzeln miteinander in Verbindung zu setzen: Wäre der Anteil an Kettenverlängerer KV in ETPU deutlich niedriger als in Beispiel 1, so könnte nur der niedrigere beider Werte als in beiden Formulierungen vorliegend angenommen werden. Im gewählten Beispiel sind die Mengen gemäß Beispiel 1 jeweils vollständig in den Mengen gemäß ETPU enthalten, so dass keine derartige Unterscheidung notwendig wird.

Entsprechende Berechnungen gelten für die Mengen an Polyisocyanat-Komponente.

Im Ergebnis geben die Zahlenwerte in Gew.-% den Grad der Übereinstimmung zwischen den Grundbausteinen der Matrix und der TPU-Partikel an. Diese Übereinstimmung ist erfindungsgemäß besonders groß, so dass chemisch sehr ähnliche Matrizen und Partikel resultieren, die entsprechend eine gute Anhaftung aneinander zeigen. Im Vergleich hierzu werden gemäß WO 2008/087078 unterschiedliche Polyole in Matrix und TPU-Partikeln eingesetzt. Dagegen kann erfindungsgemäß die Anhaftung nochmals verbessert werden.

Vorzugsweise sind mindestens 60 Gew.-% der die Polyol-Kompontente der Matrix und Partikel bildenden Grundbausteine identisch und mindestens 60 Gew.-% der die Polyisocyanat-Komponente der Matrix und Partikel bildenden Grundbausteine identisch.

Besonders bevorzugt sind mindestens 65 Gew.-% der die Polyol-Komponente der Matrix und Partikel bildenden Grundbausteine identisch, und mindestens 85 Gew.-% der die Polyisocyanat-Komponente der Matrix und Partikel bildenden Grundbausteine sind identisch.

Dabei liegen im Kombinationsschaum Matrix und Partikel vorzugsweise in einem Gewichtsverhältnis im Bereich von 0,1 bis 10 : 1 vor.

Erfindungsgemäß wird durch die Kombination eines geschlossenzelligen Partikelschaums mit einer nahezu chemisch identischen Komponente, die als Systemschaum verarbeitet wird und eine hervorragende Haftung auf dem Partikelschaum zeigt, ein Produkt erhalten, das auch bei geringer Dichte schrumpffrei ist und im Vergleich zu einem reinen Systemschaum auf gleicher Basis bessere mechanische Eigenschaften zeigt. Die gute Haftung der offenzelligen Phase auf der geschlossenzelligen Phase wird bedingt durch den chemisch weitgehend identischen Aufbau.

Ein weiterer Grund für das hohe mechanische Niveau bei relativ niedriger Dichte, kann damit erklärt werden, dass der Kombinationsschaum eine Art dreidimensionales Sandwich-Bauteil darstellt.

Im idealisierten Fall bildet der TPU-Partikelschaum eine Schüttung aus niederdichten hochelastischen, geschlossenzelligen Kugeln. Die Zwischenräume dieser Schüttung sind mit einem nicht schrumpfenden, vorzugsweise höherdichten Systemschaum gefüllt, der aufgrund seines chemischen Aufbaus eine sehr gute Haftung zu den TPU Partikeln zeigt.

Die aufeinander abgestimmten Komponenten dieser dreidimensionalen Sandwich-Struktur zeigen vergleichbare Dehnungs- und Reißfestigkeitswerte, so dass bei guter Haftung der beiden Phasen aneinander, die offenzellige, höher dichte Phase bei einer Zugbeanspruchung die Zugkräfte aufnimmt und bei steigender Dehnung die eingebetteten geschlossenzelligen Partikel komprimiert werden und so dem Zug eine hohe Kraft entgegensetzen können. Bei einer Kompression des Kombinationsschaums und auch im Fall der Bestimmung der Rückprallelastizität gibt der offenzellige Systemschaum den Druck an die geschlossenzelligen TPU-Partikel weiter. Durch die Kompression der komplett in eine elastische Matrix eingeschlossenen Gasblasen kann der geschlossenzellige Schaum eine deutlich höhere Gegenkraft als ein offenzelliger Schaum aufbauen und auch wieder abgeben.

Bei einem offenzelligen Elastomerschaum nimmt somit die Matrix im Wesentlichen die Zug- und Druckkräfte auf, bei einem geschlossenzelligen System wir die Matrix sowohl bei Kompression als auch bei Zug durch die Gasblase unterstützt (Luftballon-Effekt). Der geschlossenzellige Partikelschaum verstärkt somit den offenzelligen Schaum in seinem mechanischen Verhalten, obwohl er vorzugsweise eine niedrigere Dichte als dieser besitzt. Ohne den offenzelligen Schaum würde allerdings die Reißfestigkeit des geschlossenzelligen Schaums allein nicht ausreichen, da seine Dichte für hohe Zugkräfte zu gering ist. Durch die Kompression und schnelle Expansion des Gases kann die gespeicherte Energie in den Partikeln schnell wieder abgegeben werden, was zu einer verbesserten Rückprallelastizität führt. Die Dichte des Kombinationsschaums ergibt sich aus den Einzelschichten und den Anteilen der beiden verwendeten Phasen, dem vorzugsweise niederdichten geschlossenzelligen und dem vorzugsweise höher dichten offenzelligen Schaum.

Wird im Vergleich ein offenzelliger Schaum verwendet, der aufgrund chemischer Unverträglichkeit eine schlechte Haftung auf dem Partikelschaum besitzt, verfällt der Verstärkungseffekt. Wird ein Bindersystem verwendet, bei dem die Reißdehnung zu klein ist, kommt es ebenfalls zu einem früheren Versagen des Bauteils.

Bevorzugte Merkmale eines Kombinationsschaums auf der Basis dreidimensionaler offenzelliger und geschlossenzelliger Bereiche sind:
- dass geschlossenzellige Partikel mit einem im Wesentlichen offenzeilligen System umschäumt werden;
- dass der Kombinationsschaum nach der Herstellung makroskopische dreidimensionale Bereiche mit geschlossenzelliger und offenzelliger Struktur enthält;
- dass die geschlossenzelligen Bereiche einen Durchmesser größer 1 mm, vorzugsweise größer als 2 mm haben;
- dass der geschlossenzellige und der offenzellige Schaum im Wesentlichen aus den gleichen Rohstoffen aufgebaut ist;
- dass es sich bei dem offenzelligen und dem geschlossenzelligen Schaum um Polyurethane handelt;
- dass es sich bei den identischen Rohstoffen um Diole und Diisocyanate handelt;
- dass die Diole vorzugsweise Polyether- oder Polyesterdiole sind;
- dass es sich vorzugsweise um Polytetrahydrofuran und MDI handelt;
- dass als geschlossenzelliger Schaum vorzugsweise expandierter Partikelschaum verwendet wird;
- dass der Partikelschaum niederdichter als der Systemschaum ist.

Die zur Herstellung der erfindungsgemäßen Polyurethanverbundstoffe verwendeten organischen und/oder modifizierten Polyisocyanate umfassen die aus dem Stand der Technik bekannten aliphatischen, cycloaliphatischen und aromatischen zwei- oder mehrwertigen Isocyanate sowie beliebige Mischungen daraus. Beispiele sind 4,4'-Diphenylmethandiisocyanat, 2,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 4,4'-Methylendicyclohexyldiisocyanat (H12MDI), 2,4- oder 2,6- Toluylendiisocyanat (TDI) oder Mischungen der genannten Isocyanate.

Bevorzugt wird 4,4-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente wird zur Herstellung des offenzelligen Systems bevorzugt in Form von Polyisocyanatprepolymeren eingesetzt. Diese Polyisocyanatprepolymere sind erhältlich, indem die vorstehend beschriebenen Polyisocyanate, beispielsweise bei Temperaturen von 30 bis 100 °C, bevorzugt bei etwa 80 °C, mit Polyolen, zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen, insbesondere Polytetrahydrofuran oder Polyesterpolyalkohol verwendet. Die Uretoniminmodifizierung verflüssigt das Prepolymer bei Raumtemperatur, was die Herstellung des Matrixsystems erleichtert. Geringe Anteile von Polyolen auf Basis von Polyestern, beispielsweise ausgehend von Adipinsäure, oder Polyethern, beispielsweise ausgehend von Ethylenoxid und/oder Propylenoxid, können mitverwendet werden, wie sie in WO 2008/087078 beschrieben sind.

Polyole sind dem Fachmann bekannt und beispielsweise beschrieben im "Kunststoffhandbuch, Band 7, Polyurethane", Carl Hanser Verlag, 3. Auflage 1993, Kapitel 3.1.

Gegebenenfalls werden den genannten Polyolen bei der Herstellung der Isocyanatprepolymere übliche Kettenverlängerer oder Vernetzungsmittel zugegeben. Besonders bevorzugt werden als Kettenverlängerer oder Vernetzungsmittel Dipropylenglycol oder Tripropylenglycol eingesetzt.

Höhermolekulare Verbindungen mit mindestens zwei gegen Isocyanatgruppen reaktiven H-Atomen sind vorzugsweise Polytetrahydrofuran oder Polyesterpolyole.

Polytetrahydrofuran wird nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden wie Tetrahydrofuran. Weiter können als Katalysatoren auch Multimetallcyanidverbindungen, sogenannte DMC-Katalysatoren, eingesetzt werden.

Als Startermolekül kommen Wasser oder 2- und 3-wertige Alkohole, wie Ethylenglykol, 1 ,2- und 1 ,3-Propandiol, Diethylenglykol, Dipropylenglykol, 1 ,4-Butandiol, Glycerin oder Trimethylolpropan in Betracht.

Die Polytetrahydrofurane besitzen vorzugsweise eine Funktionalität von 2 bis 3, vorzugsweise 2, und Molekulargewichte von 250 bis 8.000, vorzugsweise von 500 bis 4.000 g/mol, im thermoplastischen Polyurethan 600 bis 2.500 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 10 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z. B. ε-Caprolacton oder Hydroxycarbonsäuren, z. B. ω-Hydroxycapronsäure.

Zur Herstellung der Polyesterpolyole können die organischen, z. B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z. B. Stickstoff, Kohlenmonoxid, Helium, Argon u.a. in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 480 bis 3.000, vorzugsweise 1.000 bis 3.000 g/mol, im thermoplastischen Polyurethan 500 bis 2.500 g/mol.

Der Polyurethanschaum der Matrix kann ohne oder unter Mitverwendung von Kettenverlängerungs- und/oder Vernetzungsmitteln hergestellt werden. Zur Modifizierung der mechanischen Eigenschaften, z. B. der Härte, kann sich jedoch der Zusatz von Kettenverlängerungsmitteln, Vernetzungsmitteln oder gegebenenfalls auch Gemischen davon als vorteilhaft erweisen. Dabei handelt es sich bei Kettenverlängerern und/oder Vernetzungsmittel um Substanzen mit einem Molekulargewicht von vorzugsweise kleiner 400 g/mol, besonders bevorzugt von 60 bis 400 g/mol, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, Propandiol-1,2, Propandiol-1,3, Butandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen und/oder 1,2-Propylenoxid und den vorgenannten Diolen und/oder Triolen als Startermoleküle.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Polyole und Kettenverlängerungs/Vernetzungsmittel zum Einsatz.

Werden Katalysatoren zur Herstellung der erfindungsgemäßen Hybridmaterialien eingesetzt, werden bevorzugt Verbindungen verwendet, welche die Reaktion der Polyole mit den organischen, gegebenenfalls modifizierten Polyisocyanaten stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungeri, wie Triethanolamin, Triisopropanolamin, N-Methylund N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat und die Dialkylzinn(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Polyole.

Ferner können bei der Herstellung der Polyurethanschaumstoffe als Matrixmaterial Treibmittel zugegen sein. Diese Treibmittel enthalten gegebenenfalls Wasser. Als Treibmittel können neben Wasser auch oder zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane^{®} 365 mfc. In einer bevorzugten Ausführungsform wird als Treibmittel eine Mischung dieser Treibmittel, enthaltend Wasser, eingesetzt, insbesondere Wasser als alleiniges Treibmittel. Wird kein Wasser als Treibmittel eingesetzt, werden vorzugsweise ausschließlich physikalische Treibmittel verwendet. Der Gehalt an Wasser beträgt gemäß einer Ausführungsform von 0,1 bis 2 Gew.-%, bevorzugt 0,2 bis 1.5 Gew.-%, besonders bevorzugt 0,3 bis 1.2 Gew.-%, insbesondere 0.4 bis 1 Gew.-%, bezogen auf das Gesamtgewicht der Matrix.

In einer weiteren Ausführungsform werden als zusätzliches Treibmittel Mikrohohlkugeln, die physikalisches Treibmittel enthalten, zugegeben. Die Mikrohohlkugeln können auch im Gemisch mit Wasser, den vorstehend genannten chemischen Treibmitteln und/ oder physikalischen Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 %, bezogen auf das Gesamtgewicht der Matrix, zugesetzt.

Die Partikel aus thermoplastischem Polyurethan (TPU) werden aus expandierbaren Partikeln, expandierten Partikeln oder in einem kontinuierlichen Verfahren auf einem Extruder hergestellt.

Die geschäumten Partikel bestehen dabei aus einem geschäumten thermoplastischen Polyurethanmaterial. Diese geschäumten Partikel haben vorzugsweise einen Durchmesser von 0,1 mm bis 10 cm, vorzugsweise von 0,5 mm bis 5 cm und besonders bevorzugt von 1 mm bis 2 cm und sind vorzugsweise kugelförmig oder ellipsoid. Bei nicht kugelförmigen, zum Beispiel ellipsoiden Partikeln, ist mit Durchmesser die längste Achse gemeint. Die geschäumten Partikel haben eine Dichte von vorzugsweise 0,005 bis 0,50 g/cm³, besonders bevorzugt von 0,01 bis 0,3 g/cm³ und insbesondere von 0,02 bis 0,2 g/cm³. Vorzugsweise weisen die geschäumten Partikel eine kompakte äußere Haut auf. Dabei ist unter einer kompakten Haut zu verstehen, dass die Schaumzellen im äußeren Bereich der geschäumten Partikel kleiner sind als in deren Innern. Besonders bevorzugt enthält der äußere Bereich der geschäumten Partikel keine Poren, und die Zellen der Partikel sind geschlossenzellig.

Vorzugsweise basieren die geschäumten Partikel auf einem thermoplastischen Polyurethan, zu dessen Herstellung Polytetrahydrofuran eingesetzt wurde. Das Molekulargewicht des eingesetzten Polytetrahydrofurans beträgt vorzugsweise 600 bis 2500 g/mol. In einer weiteren bevorzugten Ausführungsform wird zur Herstellung der geschäumten Partikel ein Polyesterpolyalkohol mit einem Molekulargewicht von 500 bis 2500 g/mol, vorzugsweise 600 bis 900 g/mol, eingesetzt.

Als expandierbare Partikel aus thermoplastischem Polyurethan, die Treibmittel in dispergierter oder gelöster Form enthalten, können beispielsweise mit Treibmittel imprägnierte Partikel aus thermoplastischem Polyurethan verwendet werden. Solche Partikel und deren Herstellung sind beispielsweise in WO 94/20568 und WO 2007/082838 beschrieben.

Besonders bevorzugt werden zur Herstellung der expandierten und/oder der expandierbaren Partikel thermoplastische Polyurethane eingesetzt, bei denen der Schmelzbereich bei einer DSC-Messung mit einer Aufheizrate von 20 K/min unterhalb von 130 °C, besonders bevorzugt unterhalb von 120 °C beginnt und bei denen das thermoplastische Polyurethan (auch als TPU bezeichnet) bei 190 °C und einem Auflagegewicht von 21 ,6 kg nach DIN EN ISO 1 133 höchstens eine Schmelzflussrate (MFR) von 250 g/10 min, besonders bevorzugt eine Schmelzflussrate von kleiner 200 g/10 min aufweist. Vorzugsweise weist das treibmittelhaltige thermoplastische Polyurethan einen mittleren Durchmesser von 0,1 bis 10 mm auf.

Ein solches thermoplastisches Polyurethan basiert bevorzugt auf einem Polyalkohol, besonders bevorzugt auf Polyetherdiol. Dabei kommt besonders bevorzugt Polytetrahydrofuran in Betracht. Besonders bevorzugt basiert das TPU auf Polytetrahydrofuran mit einem Molekulargewicht zwischen 600 g/mol und 2.500 g/mol. Die Polyalkohole können sowohl einzeln als auch in Mischung untereinander zur Anwendung kommen.

Alternativ konnten gute Ergebnisse erzielt werden mit TPU, das auf Polyesteralkohol, bevorzugt Polyesterdiol, bevorzugt auf der Basis von Adipinsäure und Butan-1,4-diol, mit einem Molekulargewicht zwischen 500 und 2.500 g/mol, besonders bevorzugt auf 600 g/mol und 900 g/mol basiert.

Die Herstellung von erfindungsgemäß eingesetztem thermoplastischem Polyurethan erfolgt beispielsweise durch Umsetzung von Isocyanaten (d) mit gegenüber Isocyanaten reaktiven Verbindungen mit einem Molekulargewicht von 500 bis 10.000 (c2) und gegebenenfalls Kettenverlängerungsmitteln mit einem Molekulargewicht von 50 bis 499 (c3), gegebenenfalls in Gegenwart von Katalysatoren (c4) und/oder von üblichen Hilfs- und/oder Zusatzstoffen (c5).

Als organische Isocyanate (d) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Heptaund/oder Oktamethylendiisocyanat, 2-Methyl-pentamethylen-diisocyanat-1,5, 2-Ethyl-butylendiisocyanat-1,4, Pentamethylen-diisocyanat-1,5, Butylendiisocyanat-1,4, 1-Isocyanato-3,3,5-trimethyl-5-isocyanatomethyl-cyclohexan (Isophoron-diisocyanat, IPDI), 1,4-und/oder 1,3-Bis(isocyanatomethyl)cyclohexan (HXDI), 1,4-Cyclohexandiisocyanat, 1-Methyl-2,4- und/oder -2,6-cyclohexan-diisocyanat und/oder 4,4'-, 2,4'-und 2,2'-Dicyclohexylmethan-diisocyanat, 2,2'-, 2,4'- und/oder 4,4'- Diphenylmethandiisocyanat (MDI), 1,5-Naphthylendiisocyanat (NDI), 2,4- und/oder 2,6- Toluylendiisocyanat (TDl), Diphenylmethandiisocyanat, 3,3'-Dimethyl-diphenyldiisocyanat, 1,2-Diphenylethandiisocyanat und/oder Phenylendiisocyanat.

Als gegenüber Isocyanaten reaktive Verbindungen (c2) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit zahlenmittleren Molekulargewichten von 500 bis 8.000, bevorzugt 600 bis 6.000, insbesondere 800 bis 4.000 g/mol, und bevorzugt einer mittleren Funktionalität von 1,8 bis 2,3, bevorzugt 1,9 bis 2,2, insbesondere 2 sowie Mischungen daraus.

In einer besonders bevorzugten Ausführungsform besteht die gegenüber Isocyanaten reaktive Verbindung (c2) aus einem Polytetrahydrofuran mit einem zahlenmittleren Molekulargewicht von 600 bis 2.500 g/mol.

In einer weiteren besonders bevorzugten Ausführungsform besteht die gegenüber Isocyanaten reaktive Verbindung (c2) aus einem Polyesteralkohol, bevorzugt Polyesterdiol, bevorzugt auf der Basis von Adipinsäure und Butan-1 ,4-diol, mit einem zahlenmittleren Molekulargewicht zwischen 500 und 2500 g/mol, besonders bevorzugt auf 600 g/mol und 2.400 g/mol.

Als Kettenverlängerungsmittel (c3) können allgemein bekannte aliphatische, araliphatisehe, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

Als geeignete Katalysatoren (c4), welche insbesondere die Reaktion zwischen den NCO-Gruppen der Diisocyanate (c1) und den Hydroxylgruppen der Aufbaukomponenten (c2) und (c3) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo(2,2,2)-octan und ähnliche sowie insbesondere organische Metallverbindungen wie Titansäureester, Eisenverbindungen wie z.B. Eisen-(III)- acetylacetonat, Zinnverbindüngen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche einsetz-bar. Die Katalysatoren werden üblicherweise in Mengen von 0,0001 bis 0,1 Gew.- Teilen pro 100 Gew.-Teile Polyhydroxylverbindung (c2) eingesetzt.

Neben Katalysatoren (c4) können den Aufbaukomponenten (c1) bis (c3) auch übliche Hilfsmittel und/oder Zusatzstoffe (c5) hinzugefügt werden. Genannt seien beispielsweise Treibmittel, oberflächenaktive Substanzen, Füllstoffe, Flammschutzmittel, Keimbildungsmittel, Oxidationsstabilisatoren, Gleit und Entformungshilfen, Farbstoffe und Pigmente, gegebenenfalls zusätzlich zu den erfindungsgemäßen Stabilisatorengemische weitere Stabilisatoren, z.B. gegen Hydrolyse, Licht, Hitze oder Verfärbung, anorganische und/oder organische Füllstoffe, Verstärkungsmittel und Weichmacher.

Neben den genannten Komponenten (c1) und (c2) und gegebenenfalls (c3), (c4) und (c5) können auch Kettenregler, üblicherweise mit einem Molekulargewicht von 31 bis 499 g/mol, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im Allgemeinen in einer Menge von 0 bis 5, bevorzugt 0,1 bis 1 Gew.-Teile, bezogen auf 100 Gew.-Teile der Komponente (c2) eingesetzt werden und fallen definitionsgemäß unter die Komponente (c3).

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (c1) zu den gegenüber Isocyanaten reaktiven Gruppen, d.h. den aktiven Wasserstoffen, der Komponenten (c2) und (c3). Bei einer Kennzahl von 100 kommt auf eine Isocyanatgruppe der Komponente (d) ein aktives Wasserstoffatom, d. h. eine gegenüber Isocyanaten reaktive Gruppe, der Komponenten (c2) und (c3). Bei Kennzahlen über 100 liegen mehr Isocyanatgruppen als OH-Gruppen vor.

Die Herstellung der TPU kann nach den bekannten Verfahren kontinuierlich, beilspielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (c1), (c2) und gegebenenfalls (c3), (c4) und/oder (c5) nacheinander oder gleichzeitig miteinander vermischt werden, wobei die Reaktion unmittelbar einsetzt.

Beim Extruderverfahren werden die Aufbaukomponenten (c1), (c2) sowie gegebenenfalls (c3), (c4) und/oder (c5) einzeln oder als Gemisch in den Extruder eingeführt, z. B. bei Temperaturen von 100 bis 280°C, vorzugsweise 140 bis 250°C zur Reaktion gebracht, das erhaltene TPU wird extrudiert, abgekühlt und granuliert. Gegebenenfalls kann es zweckmäßig sein, das erhaltene TPU vor der Weiterverarbeitung bei 80 bis 120°C, vorzugsweise 100 bis 110°C über einen Zeitraum von 1 bis 24 Stunden zu tempern.

Zur Herstellung der expandierbaren Partikel aus thermoplastischem Polyurethan wird das erfindungsgemäße TPU vorzugsweise im Suspensions- oder Extrusionsverfahren mit Treibmittel beladen.

Beim Suspensionsverfahren wird das thermoplastische Polyurethan als Granulat eingesetzt und mit Wasser, einem Suspensionshilfsmittel und dem Treibmittel in einem geschlossenen Reaktor bis über die Erweichungstemperatur erhitzt. Dabei werden die Polymerpartikel mit dem Treibmittel imprägniert. Vorzugsweise ist die Imprägniertemperatur dabei größer als 100 °C, besonders bevorzugt ist diese im Bereich von 100 bis 150 °C und insbesondere von 110 bis 145 °C. Bei den Imprägnierbedingungen diffundiert Treibmittel in die Polymergranulatpartikel hinein. Die Imprägnierdauer beträgt im Allgemeinen 0,5 bis 10 Stunden. Anschließend wird die heiße Suspension abgekühlt, wobei sich die Partikel unter Einschluss des Treibmittels verfestigen, und der Reaktor entspannt. Man erhält expandierbare TPU-Partikel, die schließlich in üblicherweise aus der Suspension abgetrennt werden. Anhaftendes Wasser wird in der Regel durch Trocknen, z. B. im Stromtrockner, entfernt. Falls erforderlich kann man davor oder danach anhaftendes Suspensionshilfsmittel entfernen, indem man die Partikel mit einem geeigneten Reagens behandelt. Beispielsweise kann man mit einer Säure, wie Salpetersäure, Salzsäure oder Schwefelsäure, behandeln, um säurelösliche Suspensionshilfsmittel, z. B. Metallcarbonate oder Tricalciumphosphat, zu entfernen.

Als TPU-Granulat eignet sich beispielsweise ein sogenanntes Minigranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des TPU und ggf. weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5mm.

Als Treibmittel für das Suspensionsverfahren verwendet man bevorzugt organische Flüssigkeiten oder anorganische Gase oder Gemische davon. Dabei kommen als organische Flüssigkeiten halogenierte Kohlenwasserstoffe in Frage, bevorzugt sind jedoch gesättigte, aliphatische Kohlenwasserstoffe, insbesondere solche mit 3 bis 8 C Atomen, wie Butan und Pentan. Geeignete anorganische Gase sind Stickstoff, Luft, Ammoniak oder Kohlendioxid. Weiterhin können Mischungen der genannten Treibmittel eingesetzt werden. Die Treibmittelmenge beträgt bevorzugt 0,1 bis 40, insbesondere 0,5 bis 35 und besonders bevorzugt 1 bis 30 Gew.-Teile, bezogen auf 100 Gew.- Teile eingesetztes TPU. Als Suspensionshilfsmittel eignen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das thermoplastische Polyurethan, verwendet.

Beim Extrusionsverfahren wird das thermoplastische Polyurethan in einem Extruder unter Aufschmelzen mit einem Treibmittel vermischt, das dem Extruder zugeführt wird. Die treibmittelhaltige Mischung wird unter solchen Druck und Temperaturbedingungen ausgepresst und granuliert, dass das dieses nicht expandiert. Eine technisch günstige Methode ist die Unterwassergranulierung in einem Wasserbad, das eine Temperatur unter 100°C aufweist und unter einem Druck von mindestens 2 bar (absolut) steht. Die Temperatur darf nicht zu tief sein, da sonst die Schmelze an der Düsenplatte erstarrt, und sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Wasserdruck sein. Bei den besonders bevorzugten Treibmitteln Pentan oder Butan liegt die optimale Wasserbadtemperatur bei 30 bis 60°C und der optimale Wasserdruck bei 8 bis 12 bar (absolut). Statt Wasser kann man auch andere geeignete Kühlmedien verwenden. Ebenso kann man eine Wasserringgranulierung anwenden. Dabei ist der Schneidraum derart eingekapselt, dass die Granuliervorrichtung unter Druck betrieben werden kann. Man erhält auf diese Weise expandierbare Partikel aus thermoplastischem Polyurethan, die anschließend vom Wasser abgetrennt und ggf. getrocknet werden.

Als Extruder kommen alle üblichen Schneckenmaschinen in Betracht, insbesondere Einschnecken- und Doppelschneckenextruder (z. B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München 1998, Kap. 3.2.1 und 3.2.4, beschrieben sind. Der Extruder wird üblicherweise bei einer Temperatur betrieben, bei der das TPU als Schmelze vorliegt, beispielsweise bei 150 bis 250, insbesondere 180 bis 210°C. Drehzahl, Länge, Durchmesser und Ausgestaltung der Extruderschnecke(n), zugeführte Mengen und Extruderdurchsatz werden in bekannter Weise derart gewählt, dass im extrudierten TPU die Zusatzstoffe gleichmäßig verteilt sind.

Beim Extrusionsverfahren verwendet man als Treibmittel bevorzugt flüchtige organische Verbindungen mit einem Siedepunkt bei Normaldruck 1013 mbar von -25 bis 150, insbesondere-10 bis 125°C. Gut geeignet sind Kohlenwasserstoffe, die vorzugsweise halogenfrei sind, insbesondere C₄₋₁₀-Alkane, beispielsweise die Isomere des Butans, Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate. Weiter können auch Mischungen der genannten Treibmittel verwendet werden. Diese Treibmittel werden vorzugsweise in einer Menge von 0,1 bis 40, besonders bevorzugt 0,5 bis 35 und insbesondere 1 bis 30 Gew.-Teile, bezogen auf 100 Gew.-Teile eingesetztes thermoplastisches Polyurethan, eingesetzt.

Werden im erfindungsgemäßen Verfahren zur Herstellung des erfindungsgemäßen Hybridmaterials anstelle von expandierbaren Partikeln aus thermoplastischem Polyurethan bevorzugt bereits expandierte Partikel aus thermoplastischem Polyurethan eingesetzt, werden diese vorzugsweise durch Expansion der expandierbaren Partikel erhalten, beispielsweise wenn beim Suspensionsverfahren das imprägnierte Granulat bei Temperaturen oberhalb der Erweichungstemperatur des thermoplastischen Polyurethans entspannt wird oder wenn beim Extrusionsverfahren der Austrag des Extruders nicht gekühlt und nicht unter Druck gehalten wird.

Der Reaktionsmischung zur Herstellung der Matrix oder Partikel können gegebenenfalls auch noch Hilfsmittel und/oder Zusatzstoffe zugegeben werden. Genannt seien beispielsweise oberflächenaktive Substanzen, Schaumstabilisatoren, Zellregler, Trennmittel, Füllstoffe, Farbstoffe, Pigmente, Hydrolyseschutzmittel, geruchsabsorbierende Substanzen und fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkalioder Ammoniumsalze von Dodecylbenzoloder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyol-Komponente, angewandt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 (EPA-153 639), Gemischen aus organischen Aminen, Metallsalzen der Stearinsäure und organischen Mono und/oder Dicarbonsäuren oder deren Anhydride (DE-A-3 607 447) oder Gemischen aus einer Iminoverbindung, dem Metallsalz einer Carbonsäure und gegebenenfalls einer Carbonsäure (US 4 764 537).

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Bentonit, Serpentin, Hornblenden, Amphibole, Chrisotil, Talkum; Metalloxide, wie Kaolin, Aluminiumoxide, Titanoxide, Zinkoxid und Eisenoxide, Metallsalze wie Kreide, Schwerspat und anorganische Pigmente, wie Cadmiumsulfid, Zinksulfid sowie Glas u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall und insbesondere Glasfasern verschiedener Länge, die gegebenenfalls geschlichtet sein können. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Matrix vorteilhafterweise in Mengen von 0,5 bis 50 Gew.-%, vorzugsweise 1 bis 40 Gew.-%, bezogen auf das Gewicht der Matrix, zugegeben, wobei jedoch der Gehalt an Matten, Vliesen und Geweben aus natürlichen und synthetischen Fasern Werte bis 80 Gew.-% erreichen kann.

In einem erfindungsgemäßen Kombinationsschaum beträgt der Volumenanteil der geschäumten Partikel aus thermoplastischem Polyurethan vorzugsweise 20 Volumenprozent und mehr, besonders bevorzugt 40 Volumenprozent und mehr bevorzugt 60 Volumenprozent und mehr und insbesondere 70 Volumenprozent und mehr, jeweils bezogen auf das Volumen des erfindungsgemäßen Kombinationsschaums. Als Obergrenze kommen 99 Volumenprozent in Betracht.

In einer bevorzugten Ausführungsform beträgt das Äquivalenzverhältnis von NCO-Gruppen der Polyisocyanate zur Summe der reaktiven Wasserstoffatome der Polyole 1 : 0,8 bis 1 : 1 ,25, vorzugsweise 1 : 0,9 bis 1 : 1 ,15. Die Integralschaumstoffe werden vorzugsweise nach dem one-shot-Verfahren mit Hilfe der Niederdruck oder Hochdrucktechnik in geschlossenen, zweckmäßigerweise temperierten Formwerkzeugen hergestellt. Die Formwerkzeuge bestehen gewöhnlich aus Metall, z. B. Aluminium oder Stahl. Diese Verfahrensweisen werden beispielsweise beschrieben von Piechota und Röhr in "Integralschaumstoff, Carl-Hanser-Verlag, München, Wien, 1975, oder im Kunststoff-Handbuch, Band 7, Polyurethane, 3. Auflage, 1993, Kapitel 7.

Die Ausgangskomponenten werden dazu bei einer Temperatur von 15 bis 90 °C, vorzugsweise von 20 bis 35 °C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 90 °C, vorzugsweise 30 bis 60 °C.

Die Menge des in das Formwerkzeug eingebrachten Reaktionsgemisches wird so bemessen, dass die erhaltenen Formkörper aus Integralschaumstoffen eine Dichte von 0,08 bis 0,70 g/cm³, insbesondere von 0,12 bis 0,60 g/cm³ aufweisen. Die Verdichtungsgrade zur Herstellung der Formkörper mit verdichteter Randzone und zelligem Kern liegen im Bereich von 1 ,1 bis 8,5, vorzugsweise von 2, 1 bis 7,0.

Die erfindungsgemäßen Verfahren ermöglichen es, Kombinationsschäume mit einer Matrix aus Polyurethan und darin enthaltenen geschäumten Partikeln aus thermoplastischem Polyurethan herzustellen, bei denen eine homogene Verteilung der geschäumten Partikel vorliegt. Dabei werden insbesondere bei Einsatz von expandierbaren Partikeln im Verfahren zur Herstellung der erfindungsgemäßen Hybridmaterialien nach Einbringen der Ausgangssubstanzen in die Form zur Gewährung der homogenen Verteilung keine speziellen Hilfsmittel oder Vorrichtungen benötigt. Weiter können die expandierbaren Partikel auch leicht in einem erfindungsgemäßen Verfahren eingesetzt werden, da sie aufgrund ihrer geringen Größe rieselfähig sind und keine speziellen Anforderungen an die Verarbeitung stellen.

Werden - bevorzugt - bereits expandierte Partikel aus thermoplastischen Polyurethan zur Herstellung von Polyurethanintegralschaumstoffen oder kompakten Formkörpern eingesetzt, wird aufgrund der hohen Dichteunterschiede der Reaktionsmischung des noch nicht ausreagierten Matrixmaterials und den expandierten Partikeln aus thermoplastischem Polyurethan eine geschlossene Form mit den expandierten Partikeln gefüllt und anschließend die Reaktionsmischung mit den übrigen Bestandteilen eingespritzt. Insbesondere bei geringen Füllgraden mit den expandierten Partikeln werden gegebenenfalls Techniken zur homogenen Verteilung der expandierten Partikel, wie langsame Rotation der Form, angewandt.

Die erfindungsgemäßen Kombinationsschäume, insbesondere mit einer Matrix aus zelligem Polyurethan, zeichnen sich durch eine sehr gute Haftung des Matrixmaterials mit den expandierten Partikeln aus thermoplastischem Polyurethan aus. Dabei reißt ein erfindungsgemäßer Kombinationsschaum nicht an der Grenzfläche von Matrixmaterial und expandierten Partikeln aus thermoplastischem Polyurethan. Dadurch ist es möglich, Kombinationsschäume herzustellen, die gegenüber konventionellen Polyurethanmaterialien bei gleicher Dichte verbesserte mechanische Eigenschaften, wie Zugfestigkeit und Elastizität haben. So ist die Zugfestigkeit in Anlehnung an DIN EN ISO 527-1 eines erfindungsgemäßen Kombinationsschaums mit zelliger Matrix bei einer gemittelten Dichte von 0,25 bis kleiner 0,4 g/cm³ vorzugsweise größer als 2.500 kPa und bei einer gemittelten Dichte von 0,1 bis kleiner 0,25 g/cm³ vorzugsweise größer als 1.500 kPa. Dabei weist ein Kombinationsschaum mit einer Matrix aus zelligem Polyurethan vorzugsweise eine mittlere Dichte von 0,05 bis 0,60, besonders bevorzugt 0,10 bis 0,50 und insbesondere 0,20 bis 0,30 g/cm³ auf.

Die Elastizität erfindungsgemäßer Kombinationsschäume in Form von Integralschaumstoffen ist vorzugsweise größer 40 % und besonders bevorzugt größer 50 % nach DIN 53512.

Weiter zeigen die erfindungsgemäßen Kombinationsschäume auf Basis von IntegralSchaumstoffen hohe Rückprallelastizitäten bei geringer Dichte und eignen sich daher hervorragend als Materialien für Schuhsohlen. Dadurch werden leichte und komfortable Sohlen mit guten Haltbarkeitseigenschaften erhalten. Solche Materialien sind insbesondere als Zwischensohlen für Sportschuhe geeignet.

Ein weiterer Vorteil eines erfindungsgemäßen Verfahrens ist es, dass Kombinationsschäume mit geringer gemittelter Dichte, insbesondere Integralschaumstoffe, herstellbar sind, ohne dass bei der Herstellung konventioneller Schaumstoffe mit der gleichen Dichte übliche Nachteile, wie Einfallstellen oder Hautablösestellen auftreten. Dadurch wird weniger Ausschuss erhalten, wodurch Kosten eingespart werden können.

Weitere Einsatzmöglichkeiten von erfindungsgemäßen Kombinationsschäumen sind Polsterungen, beispielsweise von Möbeln, und Matratzen.

Zur Herstellung von Schichtstoffen kann auf WO 2008/087078 verwiesen werden.

Die Erfindung wird durch die nachstehenden Beispiele näher erläutert.

### Beispiele

Zur Bestimmung der mechanischen Eigenschaften der ausgehärteten Schaumplatten werden aus jeder Platte je vier Zugstäbe mit einer Steg breite von 25 mm gestanzt. An diesen Zugstreifen werden die Zugfestigkeit und die Reißdehnung in Anlehnung an DIN EN ISO 527-1 ermittelt, wobei abweichend von dieser Norm eine Stegbreite von 25 mm und eine Zuggeschwindigkeit von 100 mm/min verwendet wurden. Anschließend wurde aus den Ergebnissen für jeweils eine Platte der Mittelwert gebildet.

Gemäß Tabelle 1 wurden folgende Polyurethan-Systeme untersucht. Die erfindungsgemäßen Beispiele 1 - 3 wurden mit expandierten thermoplastischen Polyurethan-Partikeln (nachfolgend abgekürzt mit ETPU) der Schüttdichte 86 g/l kombiniert. Es wurden Prüfplatten in einer auf 50°C beheizten 0,6 l Schuh-Prüfplattenform hergestellt, welche anschließend mechanisch geprüft wurden. Die Rezepturzusammensetzungen inklusive der Anteile des ETPU im Prüfkörper sind in der Tabelle 1 angegeben. Die Kennzahl, das Stoffmengenverhältnis von Isocyanatkomponente zu Polyolkomponente, beträgt bei allen Systemen 1 mit einer Abweichung kleiner 0,1.

**Tabelle 1**

| | **Bsp.** 1 | **Bsp. 2** | **Bsp. 3** | **Vgl. 1** | **Vgl. 2** | **Vgl. 3** | **Vgl. 4** | **Vgl. 5** |
|---|---|---|---|---|---|---|---|---|
| Polyol 1 | 46,4 | 45,3 | 41,9 | 31.1 | 68,4 | 52,1 | 28,6 | 53,3 |
| Polyol 2 | 5,9 | 6,2 | 7,1 | 10,1 | | 9,5 | | |
| Polyol 3 | 10 | 10,6 | 12,1 | 17,2 | | | 18,6 | 9,4 |
| Polyol 4 | | | | | | 1,2 | | |
| Polyol 5 | | | | | | | 8,6 | |
| | | | | | | | | |
| Iso 1 | 29,6 | 29,9 | 30,5 | 32,8 | 25,5 | 19,4 | 35,4 | 30,7 |
| Iso 2 | | | | | | 12 | | |
| KV | 5,1 | 5,1 | 5 | 4,5 | 6,1 | 4,7 | 7,3 | 5,6 |
| Stabi | 1,7 | 1,9 | 2,2 | 3 | | | 0,7 | |
| | | | | | | | | |
| Kat 1 | 0,1 | 0,1 | 0,2 | 0,2 | | | | |
| Kat 2 | | | | | | 0,01 | | |
| Kat 3 | | | | | | | 0,95 | 0,3 |
| Treibmittel 1 | 0,3 | 0,3 | 0,35 | 0,5 | | | 0,06 | 0,3 |
| Additiv 1 | 0,3 | 0,3 | 0,35 | 0,5 | | | | |
| Additiv 2 | 0,4 | 0,4 | 0,3 | 0,05 | | 0,8 | | 0,4 |
| Additiv 3 | | | | | | 0,4 | | |
| Additiv 4 | | | | | | 0,01 | | |
| Anteilige Gew.-% ETPU an der Gesamtrezeptur | 41,7 | 38,5 | 29,4 | | 100 | 76,9 | | |

### Dabei bedeutet:

- ETPU:: expandierte TPU-Partikel mit einer Schüttdichte von 86 g/l
- Polyol 1:: Polytetrahydrofuran mit mittlerem Molekulargewicht (MW) von 1.500 g/mol
- Polyol 2:: Rizinusöl mit mittlerem Molekulargewicht (MW) von 900 g/mol
- Polyol 3:: Polypropylenglykol mit mittlerem Molekulargewicht (MW) von 2.000 g/mol
- Polyol 4:: Polypropylenglykol mit mittlerm Molekulargewicht (MW) von 200 g/mol
- Polyol 5:: Acrylnitril/Styrol-haltiges Polypropylenglykol mit mittlerem Molekulargewicht (MW) von 4.400 g/mol

- Iso 1: 4,4-Diphenylmethandiisocyanat zum Teil carbodiimidmodifiziert mit einem NCO-Gesamtanteil von 33,6 Massenteilen
- Iso 2: aliphatisches Polyisocyanat auf Basis von isocyanuratisierten Hexamethylendiisocyanats mit einem NCO-Massenanteil von 22 Teilen
- KV: Kettenverlängerer, Diol mit einer Hydroxyzahl größer 580 mg/g

- Stabi: Polyethersiloxan-Copolymere

- Kat 1: 1-Methylimidazol
- Kat 2: Dimethylzinncarboxylat
- Kat 3: Katalysatorengemisch auf Basis von tertiären Aminen, Triethylendiamin, Triethanolamin und Dimethylaminoether
- Treibmittel 1: Wasser

- Additiv 1: Rizinusöl sulfatiertes Natriumsalz auf Fettsäureesterbasis in 50 % Wasser
- Additiv 2: Antioxidant, sterisch gehindertes Phenolderivat
- Additiv 3: K-Ca-Na-Al-Silikat in Rizinusöl
- Additiv 4: Polydimethylsiloxan

### Beispiele

In den folgenden Beispielen werden die Herstellung und die Eigenschaften der Polyurethan-Systeme beschrieben. Bei den Beispielen 1, 2 und 3 sowie den Vergleichsbeispielen 1 und 4 wurde ein Prepolymer mit einem Isocyanatgesamtanteil von 18 Massenteilen bestehend aus den Umsatzprodukten von 4,4-Diphenylmethandiisocyanat mit einem teilweise carbodiimidmodifizierten Diphenylmethan-4,4'-diisocyanat mit einem Polypropylenglykol mit mittlerem Molekulargewicht (MW) von 1970 g/mol und Tripropylenglykol sowie einem UV-Stabilisator eingesetzt. Diese einzelnen Prepolymerbestandteile sind anteilig in der Tabelle 1 aufgeführt. Entsprechend der Verarbeitung wird dieses Vorumsatzprodukt als Prepolymer in den nachfolgenden Beispielen bezeichnet.

Weiterhin wurden die ETPU-Partikel bestehend aus 61,2 Massenteilen Polytetrahydrofuran mit einem mittlerem Molekulargewicht (MW) von 1.000 g/mol, 31,8 Massenteilen 4,4-Diphenylmethandiisocyanat mit einem NCO-Gesamtanteil von 33,6 Massenteilen, 6 Massenteilen Butan-1,4-diol mit einer Hydroxyzahl von 1.245 mg/g sowie 0,1 Massenteilen UV-Stabilisator entsprechend ihres Gesamtanteils in Tabelle 1 aufgeführt. Ihre Herstellung erfolgte analog der WO 2008/087078, Seiten 23/24. Verarbeitet wurden sie in bereits ausreagierter, expandierter Form. Die erfindungsgemäßen Produkte wurden im Labor mit einem Standmischer hergestellt.

### Beispiel 1 (erfindungsgemäß)

Gemäß Tabelle 1 wurden die Bestandteile mit Ausnahme des Prepolymers und der ETPU-Partikel zusammen eingewogen und homogenisiert. Diese A-Komponente wurde auf 50°C im Heizschrank erwärmt. Daraufhin erfolgten die Prepolymerzugabe bei Raumtemperatur und eine intensive 10-sekündige Vermischung. Diese Komponenten wurden in ein zweites Gefäß gegossen, in welches vorab die ETPU-Partikel abgewogen wurden. Direkt anschließend wurden die Partikel im zweiten Gefäß mit dem PU-System für 30 s vermischt. Im Anschluss wurde diese Partikelbindermischung in eine auf 50°C temperierte Metallprüfplattenform gefüllt und bis zur Aushärtung in der Form gelassen. Aus den so hergestellten Prüfplatten wurden Prüfkörper entnommen, an welchen die mechanischen Tests durchgeführt wurden.

### Beispiel 2 (erfindungsgemäß)

Die Prüfkörper wurden gemäß Beispiel 1 erstellt und geprüft. Gemäß den Angaben in Tabelle 1 wurden die Bestandteile entsprechend der Spalte Beispiel 2 variiert.

### Beispiel 3

Die Prüfkörper wurden gemäß Beispiel 1 erstellt und geprüft. Gemäß den Angaben in Tabelle 1 wurden die Bestandteile entsprechend der Spalte für Beispiel 3 variiert.

### Vergleichsbeispiel 1 (ohne ETPU)

Gemäß Tabelle 1 wurden die Bestandteile mit Ausnahme des Prepolymers zusammen eingewogen und homogenisiert. Diese A-Komponente wurde auf 50°C im Heizschrank erwärmt. Daraufhin erfolgte die Prepolymerzugabe bei Raumtemperatur und eine intensive 10 sekündige Vermischung. Direkt anschließend wurde das System in eine auf 50°C temperierte Metallprüfplattenform gefüllt und bis zur Aushärtung in der Form gelassen. Aus den so hergestellten Prüfplatten wurden Prüfkörper entnommen, an welchen die mechanischen Tests durchgeführt wurden. Vergleichsbeispiel 1 entspricht der Matrixrezeptur von Beispiel 3, wobei die resultierende Dichte an das Beispiel 1 angepasst wurde.

### Vergleichsbeispiel 2

Die ETPU-Partikel wurden in eine dampfschweißgeeignete Metallform gefüllt. Anschließend erfolgte die Einleitung von Wasserdampf, wodurch die ETPU-Partikel zusammen sinterten. Aus den so hergestellten Prüfplatten wurden Prüfkörper entnommen, an welchen die mechanischen Tests durchgeführt wurden.

### Vergleichsbeispiel 3

Gemäß Tabelle 1 wurden die Bestandteile mit Ausnahme der Isocyanatkomponente 3 und der ETPU-Partikel zusammen eingewogen und homogenisiert. Daraufhin erfolgten die Isocyanatzugabe und eine intensive 10 sekündige Vermischung. Alle Komponenten wurden untemperiert bei einer Raumtemperatur von 22°C verarbeitet. Die Komponenten wurden in ein zweites Gefäß gegossen, in welches vorab die ETPU-Partikel abgewogen wurden. Direkt anschließend wurden die Partikel im zweiten Gefäß mit dem PU-System für 30 s gefüllt, gleichmäßig planiert und bis zur Aushärtung in der Form gelassen. Aus den so hergestellten Prüfplatten wurden Prüfkörper entnommen, an welchen die mechanischen Tests durchgeführt wurden.

### Vergleichsbeispiel 4

Gemäß Tabelle 1 wurden die Bestandteile mit Ausnahme des Prepolymers zusammen eingewogen und homogenisiert. Diese A-Komponente wurde auf 50°C im Heizschrank erwärmt. Daraufhin erfolgte die Prepolymerzugabe bei Raumtemperatur und eine intensive 10 sekündige Vermischung. Direkt anschließend wurde das System in eine auf 50°C temperierte Metallprüfplattenform gefüllt und bis zur Aushärtung in der Form gelassen. Aus den so hergestellten Prüfplatten wurden Prüfkörper entnommen, an welchen die mechanischen Tests durchgeführt wurden.

### Vergleichsbeispiel 5

Gemäß Tabelle 1 wurden die Bestandteile mit Ausnahme des Prepolymers zusammen eingewogen und homogenisiert. Diese A-Komponente wurde auf 50°C im Heizschrank erwärmt. Daraufhin erfolgte die Prepolymerzugabe bei Raumtemperatur und eine intensive 10 sekündige Vermischung. Direkt anschließend wurde das System in eine auf 50°C temperierte Metallprüfplattenform gefüllt und bis zur Aushärtung in der Form gelassen. Aus den so hergestellten Prüfplatten wurden Prüfkörper entnommen, an welchen die mechanischen Tests durchgeführt wurden.

Eigenschaften der erhaltenen Produkte

**Tabelle 2**

| | **Bsp. 3** | **Vg. 1** | **Vgl.2** | **Vgl. 5** |
|---|---|---|---|---|
| Dichte | 290 | 310 | 300 | 300 |
| Zugfestigkeit | 2816 | 1087 | 700 | 1400 |
| Reißdehnung | 190 | 126 | 100 | n. b. |

- Dichte: Raumgewicht der Prüfplatte [kg/m³]
- Zugfestigkeit: Zugfestigkeit [kPa] nach DIN EN ISO 527-1
- Reißdehnung: Reißdehnung bei Bruch [%] nach DIN EN ISO 527-1
- n. b.: nicht bestimmt

Aus der Tabelle 2 ist erkennbar, dass die erfindungsgemäßen Beispiele im gleichen Niederdichtebereich von 300 g/l +/- 10 g/l eine höhere Zugfestigkeit aufweisen als vergleichbare Systeme. Die Reißdehnungswerte fallen ebenfalls besser aus bei den erfindungsgemäßen Mustern.

**Tabelle 3**

| | Bsp. 1 | Bsp. 2 | Vgl. 3 | Vgl. 4 |
|---|---|---|---|---|
| Dichte | 215 | 270 | 175 | 275 |
| Zugfestigkeit | 1793 | 3047 | 264 | 2400 |
| Rückprall | 53 | 52 | 53 | 33 |

- Dichte: Raumgewicht der Prüfplatte [kg/m³]
- Zugefestigkeit: Zugfestigkeit [kPa] nach DIN EN ISO 527-1
- Rückprall: Rückprallelastizität [%] nach DIN EN ISO 8307

Tabelle 3 zeigt, dass die erfindungsgemäßen Beispiele auch noch bei niedrigeren Dichten bessere Zugfestigkeiten und Rückprallelastizitäten aufweisen. Von den Vergleichsbeispielen 1, 2 und 5 konnten keine prüffähigen Muster in diesem niedrigen Dichtebereich hergestellt werden.

## Patentansprüche

1. Kombinationsschaum, enthaltend eine Matrix aus Polyurethanschaum und darin enthaltenen geschäumten Partikeln aus thermoplastischem Polyurethan, wobei Matrix und Partikel jeweils aus Polyol-Komponenten und Polyisocyanat-Komponenten aufgebaut sind, **dadurch gekennzeichnet, dass** mindestens 50 Gew.-% der die Polyol-Komponenten der Matrix und Partikel bildenden Grundbausteine identisch sind und mindestens 50 Gew.-% der die Polyisocyanat-Komponente der Matrix und Partikel bildenden Grundbausteine identisch sind, wobei die Matrix ganz offenzellig ist und die in der Matrix enthaltenen geschäumten Partikel zumindest teilweise geschlossenzellig sind.

2. Kombinationsschaum nach Anspruch 1, **dadurch gekennzeichnet, dass** mindestens 60 Gew.-% der die Polyol-Komponente der Matrix und Partikel bildenden Grundbausteine identisch sind und mindestens 60 Gew.-% der die Polyisocyanat-Komponente der Matrix und Partikel bildenden Grundbausteine identisch sind.

3. Kombinationsschaum nach Anspruch 2, **dadurch gekennzeichnet, dass** mindestens 65 Gew.-% der die Polyol-Komponente der Matrix und Partikel bildenden Grundbausteine identisch sind und mindestens 85 Gew.-% der die Polyisocyanat-Komponente der Matrix und Partikel bildenden Grundbausteine identisch sind.

4. Kombinationsschaum nach Anspruch 1 oder 2, **dadurch gekennzeichnet, dass** die geschäumten Partikel einen Durchmesser von 0,1 mm bis 10 cm, vorzugsweise 0,5 mm bis 5 cm, aufweisen und kugelförmig oder ellipsoid sind.

5. Kombinationsschaum nach einem der Ansprüche 1 bis 4, **dadurch gekennzeichnet, dass** die geschäumten Partikel eine Dichte von 0,005 bis 0,50 g/cm³ aufweisen.

6. Kombinationsschaum nach einem der Ansprüche 1 bis 5, **dadurch gekennzeichnet, dass** das thermoplastische Polyurethan der geschäumten Partikel und der Polyurethanschaum der Matrix auf Polytetrahydrofuran mit einem zahlenmittleren Molekulargewicht von 600 bis 2500 g/mol basieren.

7. Kombinationsschaum nach einem der Ansprüche 1 bis 5, **dadurch gekennzeichnet, dass** das thermoplastische Polyurethan der geschäumten Partikel und der Polyurethanschaum der Matrix auf Polyesteralkohol mit einem zahlenmittleren Molekulargewicht von 500 bis 2500 g/mol basieren.

8. Kombinationsschaum nach einem der Ansprüche 1 bis 7, **dadurch gekennzeichnet, dass** die Matrix ein Schaumstoff mit einer Dichte von 0,03 bis 0,8 g/cm³ ist.

9. Kombinationsschaum nach einem der Ansprüche 1 bis 8, **dadurch gekennzeichnet, dass** im Kombinationsschaum Matrix und Partikel in einem Gewichtsverhältnis im Bereich von 0,1 bis 10 : 1 vorliegen.

10. Verwendung eines Kombinationsschaums nach einem der Ansprüche 1 bis 9 als Schuhsohle, Fahrradsattel, Polsterungen, in Bauteilen im Automobilinnen- und -außenbereich, in Bällen und Sportgeräten oder als Bodenbelag, insbesondere für Sportflächen, Leichtathletiklaufbahnen, Sporthallen, Kinderspielplätze und Gehwege.

11. Verfahren zur Herstellung von Kombinationsschäumen nach einem der Ansprüche 1 bis 9 durch Umsetzung der die Matrix aus Polyurethanschaum bildenden Polyol-Komponenten und Polyisocyanat-Komponenten sowie gegebenenfalls Kettenverlängerern, Vernetzungsmitteln, Katalysatoren, Treibmitteln, weiteren Additiven oder Gemischen davon in Gegenwart der schäumenden oder geschäumten Partikel aus thermoplastischem Polyurethan.

12. Verfahren nach Anspruch 11, **dadurch gekennzeichnet, dass** kein externes Treibmittel eingesetzt wird.

13. Verfahren nach Anspruch 11 oder 12, **dadurch gekennzeichnet, dass** man zuerst aus Polyisocyanat-Komponenten und Polyol-Komponenten der Matrix sowie gegebenenfalls Kettenverlängerem, Vernetzungsmitteln, Katalysatoren, weiteren Additiven oder Gemischen davon ein Isocyanatprepolymer mit einem NCO-Gehalt von 1 bis 20 Gew.-% herstellt und anschließend das Isocyanatprepolymer mit den geschäumten Partikeln aus thermoplastischem Polyurethan vermischt und den Verbundstoff durch Einwirkung von Wasser aushärten lässt.

## Claims

1. A combination foam comprising a matrix composed of polyurethane foam and foamed particles of thermoplastic polyurethane comprised therein, where matrix and particles are each made up of polyol components and polyisocyanate components, wherein at least 50% by weight of the basic building blocks forming the polyol component of the matrix and particles are identical and at least 50% by weight of the basic building blocks forming the polyisocyanate component of the matrix and particles are identical, wherein the matrix is completely open-cell and the foamed particles which are comprised in the matrix are at least partly closed-cell.

2. The combination foam according to claim 1, wherein at least 60% by weight of the basic building blocks forming the polyol component of the matrix and particles are identical and at least 60% by weight of the basic building blocks forming the polyisocyanate component of the matrix and particles are identical.

3. The combination foam according to claim 2, wherein at least 65% by weight of the basic building blocks forming the polyol component of the matrix and particles are identical and at least 85% by weight of the basic building blocks forming the polyisocyanate component of the matrix and particles are identical.

4. The combination foam according to claim 1 or 2, wherein the foamed particles have a diameter of from 0.1 mm to 10 cm, preferably from 0.5 mm to 5 cm, and are spherical or ellipsoidal.

5. The combination foam according to any of claims 1 to 4, wherein the foamed particles have a density of from 0.005 to 0.50 g/cm³.

6. The combination foam according to any of claims 1 to 5, wherein the thermoplastic polyurethane of the foamed particles and the polyurethane foam of the matrix are based on polytetrahydrofuran having a number average molecular weight of from 600 to 2500 g/mol.

7. The combination foam according to any of claims 1 to 5, wherein the thermoplastic polyurethane of the foamed particles and the polyurethane foam of the matrix are based on polyester alcohol having a number average molecular weight of from 500 to 2500 g/mol.

8. The combination foam according to any of claims 1 to 7, wherein the matrix is a foam having a density of from 0.03 to 0.8 g/cm³.

9. The combination foam according to any of claims 1 to 8, wherein matrix and particles are present in a weight ratio in the range 0.1 to 10:1 in the combination foam.

10. The use of a combination foam according to any of claims 1 to 9 as shoe soles, bicycle saddles, upholstery, in components in automobile interiors and exteriors, in balls and sports equipment or as floor covering, in particular for sports surfaces, lightweight athletics tracks, sports halls, children's playgrounds and footpaths.

11. A process for producing combination foams according to any of claims 1 to 9 by reaction of the polyol components and polyisocyanate components forming the matrix composed of polyurethane foam and optionally chain extenders, crosslinkers, catalysts, blowing agents, further additives or mixtures thereof in the presence of the foaming or foamed particles of thermoplastic polyurethane.

12. The process according to claim 11, wherein no external blowing agent is used.

13. The process according to claim 11 or 12, wherein an isocyanate prepolymer having an NCO content of from 1 to 20% by weight is firstly prepared from polyisocyanate components and polyol components of the matrix and optionally chain extenders, crosslinkers, catalysts, further additives or mixtures thereof and the isocyanate prepolymer is subsequently mixed with the foamed particles of the thermoplastic polyurethane and the composite is allowed to cure by action of water.

## Revendications

1. Mousse combinée, contenant une matrice en une mousse de polyuréthane et des particules moussées en polyuréthane thermoplastique contenues dans celle-ci, la matrice et les particules étant chacune formées à partir de composants polyol et de composants polyisocyanate, **caractérisée en ce qu'**au moins 50 % en poids des constituants de base formant les composants polyols de la matrice et des particules sont identiques et au moins 50 % en poids des constituants de base formant le composant polyisocyanate de la matrice et des particules sont identiques, la matrice étant entièrement à cellules ouvertes et les particules moussées contenues dans la matrice étant au moins en partie à cellules fermées.

2. Mousse combinée selon la revendication 1, **caractérisée en ce qu'**au moins 60 % en poids des constituants de base formant le composant polyol de la matrice et des particules sont identiques et au moins 60 % en poids des constituants de base formant le composant polyisocyanate de la matrice et des particules sont identiques.

3. Mousse combinée selon la revendication 2, **caractérisée en ce qu'**au moins 65 % en poids des constituants de base formant le composant polyol de la matrice et des particules sont identiques et au moins 85 % en poids des constituants de base formant le composant polyisocyanate de la matrice et des particules sont identiques.

4. Mousse combinée selon la revendication 1 ou 2, **caractérisée en ce que** les particules moussées présentent un diamètre de 0,1 mm à 10 cm, de préférence de 0,5 mm à 5 cm, et sont sphériques ou ellipsoïdales.

5. Mousse combinée selon l'une quelconque des revendications 1 à 4, **caractérisée en ce que** les particules moussées présentent une densité de 0,005 à 0,50 g/cm³.

6. Mousse combinée selon l'une quelconque des revendications 1 à 5, **caractérisée en ce que** le polyuréthane thermoplastique des particules moussées et la mousse de polyuréthane de la matrice sont à base d'un polytétrahydrofurane ayant un poids moléculaire moyen en nombre de 600 à 2 500 g/mol.

7. Mousse combinée selon l'une quelconque des revendications 1 à 5, **caractérisée en ce que** le polyuréthane thermoplastique des particules moussées et la mousse de polyuréthane de la matrice sont à base d'un polyester-alcool ayant un poids moléculaire moyen en nombre de 500 à 2 500 g/mol.

8. Mousse combinée selon l'une quelconque des revendications 1 à 7, **caractérisée en ce que** la matrice est une mousse d'une densité de 0,03 à 0,8 g/cm³.

9. Mousse combinée selon l'une quelconque des revendications 1 à 8, **caractérisée en ce que** la matrice et les particules sont présentes dans la mousse combinée en un rapport en poids dans la plage allant de 0,1 à 10:1.

10. Utilisation d'une mousse combinée selon l'une quelconque des revendications 1 à 9 en tant que semelles de chaussures, selles de vélos, rembourrages, dans des composants dans la zone interne et externe d'automobiles, dans des ballons et des appareils de sport ou en tant que revêtement de sol, notamment pour surfaces de sport, pistes d'athlétisme, gymnases, terrains de jeux pour enfants et trottoirs.

11. Procédé de fabrication de mousses combinées selon l'une quelconque des revendications 1 à 9, par mise en réaction des composants polyol et des composants polyisocyanate formant la matrice en mousse de polyuréthane, ainsi qu'éventuellement d'allongeurs de chaîne, d'agents de réticulation, de catalyseurs, d'agents gonflants, d'autres additifs ou leurs mélanges en présence des particules moussantes ou moussées en polyuréthane thermoplastique.

12. Procédé selon la revendication 11, **caractérisé en ce qu'**aucun agent gonflant externe n'est utilisé.

13. Procédé selon la revendication 11 ou 12, **caractérisé en ce qu'**un prépolymère d'isocyanate ayant une teneur en NCO de 1 à 20 % en poids est tout d'abord fabriqué à partir des composants polyisocyanate et des composants polyol de la matrice, ainsi qu'éventuellement d'allongeurs de chaîne, d'agents de réticulation, de catalyseurs, d'autres additifs ou leurs mélanges, puis le prépolymère d'isocyanate est mélangé avec les particules moussées en polyuréthane thermoplastique, et le composite est laissé durcir sous l'effet d'eau.
